# EUROPEAN PATENT SPECIFICATION

(11) **EP 1 640 695 B1**
(45) Date of publication and mention of the grant of the patent: **10.08.2011**
(21) Application number: 04747084.4
(22) Date of filing: 30.06.2004
(51) Int. Cl.: G01K 5/02, B82B 1/00

(54) **TEMPERATURE MEASURING METHOD USING MICRO TEMPERATURE SENSING ELEMENT**
TEMPERATURMESSVERFAHREN MIT EINEM MIKROTEMPERATURMESSELEMENT
PROCEDE DE MESURE DE TEMPERATURE FAISANT APPEL A UN ELEMENT DE DETECTION DE TEMPERATURE A L'ECHELLE DU MICROMETRE

(30) Priority: 30.06.2003 JP 2003186607
(43) Date of publication of application: 29.03.2006
(73) Proprietor: National Institute for Materials Science, Tsukuba-shi, Ibaraki 305-0047 (JP)
(72) Inventor: BANDO, Yoshio, Nat. Inst. for Materials Science, Tsukuba-shi, Ibaraki 305-0047 (JP); GAO, Yihua,c/o Nat. Inst. for Materials Science, Tsukuba-shi, Ibaraki 305-0047 (JP); LIU, Zongwen, Nat. Inst. for Materials Science, Tsukuba-shi, Ibaraki 305-0047 (JP); GOLBERG, Dmitri, Nat. Inst. for Materials Science, Tsukuba-shi, Ibaraki 305-0047 (JP)
(74) Representative: Calamita, Roberto
(86) International application number: PCT/JP2004/009615
(87) International publication number: WO 2005/001403

(56) References cited:
- EP-A- 1 335 192
- US-A- 5 457 343
- US-A- 6 019 509
- GAO YIHUA ET AL: "Temperature measurement using a gallium-filled carbon nanotube nanothermometer" APPLIED PHYSICS LETTERS, AIP, AMERICAN INSTITUTE OF PHYSICS, MELVILLE, NY, US, vol. 83, no. 14, 6 October 2003 (2003-10-06), pages 2913-2915, XP012035331 ISSN: 0003-6951
- BAUGHMANN R H ET AL: "Carbon Nanotubes - the Route Toward Appplications" SCIENCE, AMERICAN ASSOCIATION FOR THE ADVANCEMENT OF SCIENCE,, US, vol. 297, 2 August 2002 (2002-08-02), pages 787-792, XP002244531 ISSN: 0036-8075
- GAO Y. ET AL: 'Carbon Thermometers Containing Gallium' NATURE vol. 415, 07 February 2002, page 599, XP002244530

## Description

The present invention relates to a temperature measuring method using a minute sized temperature sensing element. More specifically, it relates to a novel temperature measuring method capable of measuring temperature accurately in a wide range, using a temperature sensing element comprising a carbon nanotube containing columnar gallium.

After the discovery of the carbon nanotube in 1991, a number of studies have been carried out by many researchers. Various technical improvements and utilization methods have been developed in relation to carbon nanotubes. For example, nowadays they are utilized widely in field effect devices, probe top ends for scanning probe microscopes, superconductive materials, highly sensitive microbalances, structural materials, minute forceps for nanoscale operation, parts for gas detectors, hydrogen energy storage devices, or the like. Moreover, studies have been actively pursued in relation to carbon nanotubes containing various fillers (Document 1 and Document 2 - see below).

For example, the following substances to be contained in carbon nanotubes have been discussed: a metal such as lead, tin, copper, indium and mercury; an alkali metal such as lithium, sodium, potassium, rubidium and cesium; a superconductor such as lead, tin, and gallium; a semiconductor such as silicon, germanium, gallium arsenide, zinc selenide, and zinc sulfide; a magnetic material such as samarium, gadolinium, lanthanum, iron, cobalt and nickel, and a mixture thereof. Moreover, an organic molecule semiconductor such as a naphthalene, an anthracene, a phenanthrene, a pyrene, and a perylene, an organic dye molecule such as a cyanine dye and a β-carotene; and a gas molecule such as hydrogen fluoride, methane, and ethane, or the like have been discussed.

On the other hand, recently, a number of researchers have been involved in the micrometer size field of study so that a nano thermometer capable of measuring temperature in the micrometer size environment has been more and more called for. However, the nano thermometers known so far have a relatively narrow measurable temperature range so that several kinds of the thermometers need to be prepared for each of the temperature ranges to be measured when measuring temperature over a wide range. Due to the fact that this is troublesome and expensive, the development of a nano thermometer capable of measuring temperature over a wide range by itself has strongly been desired.

Under such circumstances, a nano thermometer utilizing gallium, capable of accurately measuring temperature in a relatively wide temperature range has been proposed. The principle of the temperature measurement is based on the linear expansion or contraction of the gallium in response to temperature change over a wide range. By measuring the change of length of columnar gallium by high resolution transmission electron microscopy, the temperature is measured.

The production method for a temperature sensing element comprising a carbon nano tube having a 1 to 10 µm length to contain the columnar gallium and a 40 to 150 nm diameter is known already (Document 3 - see below). Moreover, the present inventors have already developed a production method for a temperature sensing element involving the heat treatment at 1,200 to 1,400°C of gallium oxide powders and carbon powders under the inert gas flow (see Application 1 - see below).

However, in relation to the temperature measuring method, using the nano thermometer utilizing a gallium discussed above, the length of the columnar gallium temperature sensing element cannot be read out unless the subject to be measured is introduced into the observation area of a high resolution transmission type electron microscope. On the other hand, once the temperature sensing element is taken out from the inside of the subject to the outside for temperature measurement, since the length of the columnar gallium returns to the length at the room temperature, the accurate temperature of the subject at the high temperature cannot be determined.
Document 1: P. Ajayan et al., Nature, vol. 361, page 333, 1993
Document 2: Official gazette of the Japanese Patent Application Laid Open No. 6-227806
Document 3: Gao, Y.H. & Bando Y., Nature, 415,599 (2002)
Application 1: Japanese Patent Application No. 2002-67661

Aocordingly, an object of the present invention is to solve the above-mentioned problems by providing a novel method capable of accurately measuring the temperature of a subject to be measured at a high temperature even when a columnar gallium temperature sensing element in a nano thermometer utilizing a gallium is taken out from the inside of the subject and the temperature is measured at the room temperature.

In order to solve the above-mentioned problems, the present invention provides a method for measuring the temperature of a subject using a minute sized temperature sensing element, said temperature sensing element comprising a carbon nano tube with continuous columnar gallium contained therein, said nano tube having one end open and the other closed, said method characterised in comprising the steps of:
(1) obtaining the relationship between temperature and length of gallium In said carbon nano tube by Introducing said temperature sensing element into the observation area of a high resolution transmission electron microscope maintained at different temperatures to measure the length of the gallium at each temperature;
(2) inserting the temperature sensing element into a subject to be measured in air;
(3) oxidizing the gallium in said carbon nano tube in the air to produce a gallium oxide layer which is firmly bonded to said carbon nano tube;
(4) taking out the temperature sensing element from the subject;
(5) measuring by high resolution transmission electron microscope the location of the top end of said gallium oxide layer in the nano tube to obtain the length of the columnar gallium; and
(6) determining the temperature of the subject on the basis of the thus obtained length of the columnar gallium and the relationship between temperature and length of gallium in said carbon nano tube obtained under step (1).

In the accompanying drawings:
FIG 1 is a high resolution transmission electron microscope image of a gallium-containing carbon nano tube temperature sensing element before heating, observed at 20°C.
FIG 2(A) is a high resolution transmission electron microscope image of the gallium-containing carbon nano tube temperature sensing element after heating to 358°C In the air, observed at 20°C, and FIG 2(B) is a graph of an energy dispersive X-ray spectrograph thereof.
FIG. 3 is a high resolution transmission electron microscope image of the gallium-containing carbon nano tube temperature sensing element at 440°C in air.
FIG 4 is a high resolution transmission electron microscope image of the gallium-containing carbon nano tube temperature sensing element after heating to 440°C in the air, observed at 20°C.

The numeral in the figures denotes the following.

### 1. gallium oxide thin layer

The present invention has the above-mentioned characteristics. The embodiments thereof will be explained hereinafter.

According to the temperature measuring method of the present invention, first, a temperature sensing element comprising a carbon nano tube with one end opened and the other end closed, containing a continuous columnar gallium is introduced into the observation area of a high resolution transmission electron microscope maintained at different temperatures so as to measure the length of the gallium at each temperature. Then, the temperature sensing element is inserted into a subject to measure its temperature so as to be placed in a heated environment in the air atmosphere. Due to the heating operation, the volume of the gallium is expanded and the top end part thereof is oxidized so as to produce gallium oxide. Since the gallium oxide is bonded with the carbon nano tube firmly so that the gallium oxide at the top end part has its position fixed even when the temperature sensing element is taken out from the subject to be measured, the temperature sensing element is taken out from the subject to have the temperature measured after cooling for measuring the length of the gallium of the temperature sensing element again using the high resolution transmission electron microscope. Thereby, the temperature of the subject can be measured.

Accordingly, the nano thermometer of the present invention utilizes the expansion characteristics of the gallium present inside the carbon nano tube in response to the temperature change so that in principle it is not different from a thermometer used in general for measuring the expansion or contraction change of mercury.

However, it differs therefrom in that the carbon nano tube has about a 1 to 10 µm length and a 40 to 150 nm diameter for the measurement of the temperature in a micrometer size environment so that it is extremely minute compared with the thermometer used in general. Therefore, in order to measure the length of the gallium in the minute carbon nano tube, use of an optical instrument such as a high resolution transmission electron microscope is necessary.

According to the present invention, the reason for selecting gallium as the substance to be contained in the carbon nano tube, is that gallium has the widest liquid phase range (29.78 to 2,403 °C) among metals, so that it has the excellent characteristics of a low vapor pressure at a high temperature. Furthermore, since with gallium the volume increases linearly in response to temperature rise in a 50 to 500°C temperature range, and furthermore, its volume reduces linearly in the case of lowering the temperature, it is suitable as a thermometer required to measure the temperature in a wide temperature range.

For example, compared with the liquid phase range (-38.87 to 356.58°C) of mercury used for an ordinary temperature, it has a wide temperature measurement range at a high temperature range, and thus the effect of using the gallium for the nano thermometer is apparent.

The carbon nano tube containing the gallium can be produced according to various kinds of methods including a known method explained as the conventional technique, a method proposed by the present inventors, et al..

With reference to the following examples, embodiments of the invention will be explained in further detail.

### Examples

### <Example 1>

A temperature sensing element was produced according to the method disclosed in the above-mentioned document 3. The structure thereof was confirmed by high resolution transmission electron microscopy with a mounted X-ray energy diffusion spectrometer. The temperature sensing element was placed onto a grid for observation by the high resolution transmission electron microscopy. Then, the temperature sensing element was observed by high resolution transmission electron microscopy maintained at 20°C and 58°C to measure the height of the gallium.

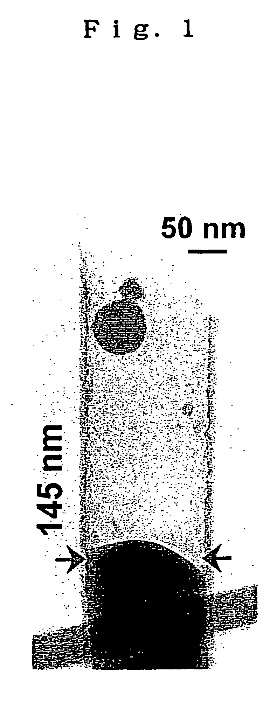

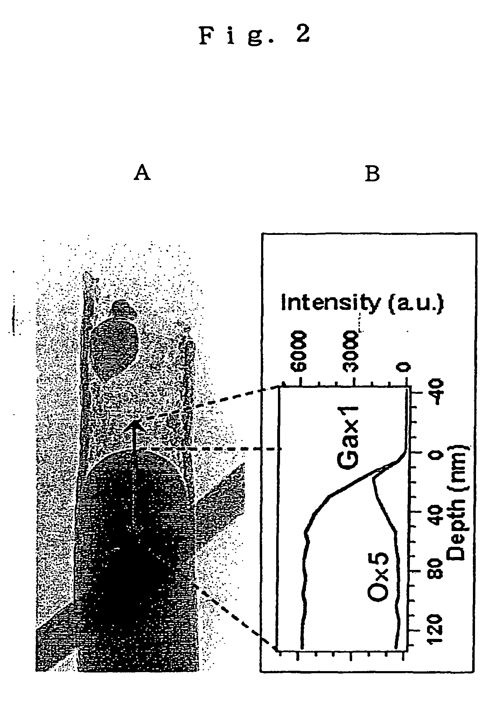

FIG. 1 is a high resolution transmission electron microscope image showing the height of the gallium at the time of observing the temperature sensing element at 20°C. FIG. 2(A) is an image of the temperature sensing element observed again at 20°C using the high resolution transmission electron microscope after introducing the same into a furnace in the air, heating at 358°C and taking it out. As shown in FIG. 2(A), the top end position of the gallium is made higher than the top end position of the gallium in FIG. 1.

Accordingly, the gallium position is made higher despite the measurements at the same ordinary temperature 20°C because the gallium top end part reacts with oxygen so as to produce gallium oxide, and the produced gallium oxide is firmly bonded with the inner wall of the carbon nano tube so that the gallium oxide layer position at the high temperature is not lowered even after temperature drop.

This can be confirmed also by the inclusion of oxygen at the gallium top end part as observed in the energy dispersive X-ray spectroscopy shown in FIG. 2(B).

### <Example 2>

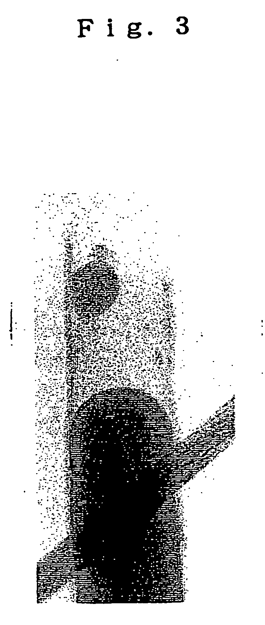

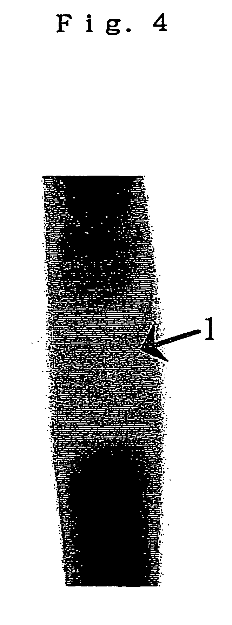

FIG. 3 is an image of the same temperature sensing element as that in example 1 observed using a high resolution transmission electron microscope after heating to 440°C. FIG 4 is an image thereof observed at 20°C using the same high resolution transmission electron microscope after heating and taking it out.

From FIG. 4, since the gallium oxide layer is bonded firmly with the inner wall of the carbon nano tube, the gallium oxide thin layer position is not changed even after temperature drop.

It is confirmed that gallium layer (1) of a low density layer is formed in the lower part of the gallium layer, and that the gallium oxide layer is bonded firmly with the inner wall of the carbon nano tube.

As a result of the measurement using the high resolution transmission type electron microscope accordingly, the height difference of the gallium top ends in FIG 1 and FIG. 2(A) was 170 nm. According to the calculation using the numerical values, the gallium volume V₀ initially at 20°C was 9.586 × 10⁷ nm³, the increased volume ΔV₁ at the time of heating to 58°C was 2.333 × 10⁵ nm³ (ΔV₁/V₀ = 0.24%), and the volume increase amount ΔV₂ at Th°C was 2.577 × 10⁶ nm³. By substituting these values in the formula Th = 58 + ΔV₂/a₀ (V₀ + ΔV₁), (wherein a₀ is the expansion coefficient of the gallium at 58°C [0.95 × 10⁻⁴/°C]), Th = 341°C can be obtained as the calculation value.

Although the value is slightly lower than the real measurement value 358°C, it was confirmed that the temperature can be measured considerably accurately at a high temperature.

As to the difference of the calculation value and the real measurement value, it is considered that the gallium volume Vo calculated with the premise that the carbon nano tube inner diameter is increased linearly is larger than the real gallium volume, the gallium density is lowered due to the oxygen diffusion, or the like.

The present invention enables temperature measurement in the micrometer size environment, and furthermore, temperature measurement in a wide temperature range of 50 to 500°C.

## Claims

1. A method for measuring the temperature of a subject using a minute sized temperature sensing element, said temperature sensing element comprising a carbon nano tube with continuous columnar gallium contained therein, said nano tube having one end open and the other closed,said method **characterised in** comprising the steps of:
(1) obtaining the relationship between temperature and length of gallium in said carbon nano tube by introducing said temperature sensing element into the observation area of a high resolution transmission electron microscope maintained at different temperatures to measure the length of the gallium at each temperature;
(2) inserting the temperature sensing element into a subject to be measured in air;
(3) oxidizing the gallium in said carbon nano tube in the air to produce a gallium oxide layer which is firmly bonded to said carbon nano tube;
(4) taking out the temperature sensing element from the subject;
(5) measuring by high resolution transmission electron microscope the location of the top end of said gallium oxide layer in the nano tube to obtain the length of the columnar gallium; and
(6) determining the temperature of the subject on the basis of the thus obtained length of the columnar gallium and the relationship between temperature and length of gallium In said carbon nano tube obtained under step (1).

2. A method as claimed in claim 1 wherein said carbon nano tube has a length of 1 to 10 µm and a diameter of 40 to 150 nm.

## Patentansprüche

1. Verfahren zu Messung der Temperatur eines Subjektes unter Verwendung eines kleinen bzw. sehr kleinen Temperatursensorelements, wobei das Temperatursensorelement ein Kohlenstoffnanorohr mit einem darin befindlichem kontinuierlichen, säulenartigen bzw. säulenförmigen Gallium aufweist, wobei das Nanorohr ein offenes Ende und ein geschlossenes Ende aufweist, wobei das Verfahren durch die folgenden Schritte **gekennzeichnet** ist:
(1) Erhalten einer Beziehung zwischen der Temperatur und der Länge des Galliums in dem Kohlenstoffnanorohr durch Einführung des Temperatursensorelements in den Observationsbereich eines Transmissions-Elektronenmikroskops mit hoher Auflösung, welches auf unterschiedlichen Temperaturen gehalten wird, zur Messung der Längen des Galliums bei jeder Temperatur;
(2) Einführen des Temperatursensorelements in ein in Luft zu messendes Subjekt;
(3) Oxidieren des Galliums in dem Kohlenstoffnanorohr in der Luft zur Erzeugung einer Galliumoxidschicht, welche fest mit dem Kohlenstoffnanorohr verbunden ist;
(4) Herausnehmen des Temperatursensorelements aus dem Subjekt;
(5) Messen mittels des Transmissions-Elektronenmikroskops mit hoher Auflösung des Ortes des oberen Endes der Galliumoxidschicht in dem Nanorohr zum Erhalt der Länge des säulenförmigen Galliums; und
(6) Bestimmen der Temperatur des Subjekts auf der Basis der so erhaltenen Länge des säulenförmigen Galliums und der Beziehung zwischen der Temperatur und der Länge des Galliums in dem Kohlenstoffnanorohr, wie sie in Schritt (1) erhalten wurde.

2. Verfahren nach Anspruch 1, bei dem das Kohlenstoffnanorohr eine Länge von 1 bis 10µm und einen Durchmesser von 40 bis 150 nm aufweist.

## Revendications

1. Procédé pour mesurer la température d'un objet en utilisant un élément de détection de température de taille minuscule, ledit élément de détection de température comprenant un nanotube de carbone dans lequel est contenu du gallium colonnaire continu, ledit nanotube ayant une extrémité ouverte et l'autre fermée, ledit procédé étant **caractérisé en ce qu'**il comprend les étapes suivantes :
(1) obtenir la relation entre la température et la longueur de gallium dans ledit nanotube de carbone en introduisant ledit élément de détection de température dans la zone d'observation d'un microscope électronique à transmission à haute résolution maintenu à différentes températures pour mesurer la longueur du gallium à chaque température ;
(2) insérer l'élément de détection de température dans un objet devant être mesuré dans l'air ;
(3) oxyder le gallium dans ledit nanotube de carbone dans l'air pour produire une couche d'oxyde de gallium qui est fixée fermement audit nanotube de carbone ;
(4) extraire l'élément de détection de température de l'objet ;
(5) mesurer par le microscope électronique à transmission à haute résolution l'emplacement de l'extrémité supérieure de ladite couche d'oxyde de gallium dans le nanotube pour obtenir la longueur du gallium colonnaire ; et
(6) déterminer la température de l'objet sur la base de la longueur ainsi obtenue du gallium colonnaire et de la relation entre la température et la longueur de gallium dans ledit nanotube de carbone obtenue à l'étape (1).

2. Procédé tel que revendiqué dans la revendication 1, dans lequel ledit nanotube de carbone a une longueur de 1 à 10 µm et un diamètre de 40 à 150 nm.
